# DEMANDE DE BREVET EUROPEEN

(11) **EP 2 660 799 A1**
(43) Date de publication de la demande: **06.11.2013**
(21) Numéro de dépôt: 12290148.1
(22) Date de dépôt: 02.05.2012
(51) Int. Cl.: G09F 3/10, G09F 3/02, B32B 7/06

(54) **Ruban de poypropylène pour le support d'Etiquettes**

(71) Demandeur: Mettler-Toledo AG, 8606 Greifensee (CH)
(72) Inventeur: Goudard, Bruno, 8047 Zürich (CH); Tudela, M. Davy, 31000 Toulouse (FR)

(57) **Abrégé**

Film en polypropylène en forme de ruban (7) destiné au support d'étiquettes (8), comportant une zone d'affaiblissement (9) transversale entre chaque étiquette (8) favorisant le déchirement du film suivant la zone d'affaiblissement (9), la zone d'affaiblissement (9) étant pourvue de motifs (11) prédécoupés non contigus possédant un axe de symétrie dans le sens de leur longueur correspondant à la direction de la zone d'affaiblissement (10), les motifs (11) ayant une forme fermée convexe, dont la longueur (12) est plus grande que la largeur (13), et la distance séparant les motifs (14) étant inférieure à la longueur des motifs (12), et les angles aigus et les angles droits des motifs (11), si existants, se trouvant toujours essentiellement sur l'axe de symétrie des motifs dans le sens de leur longueur.

## Description

La présente invention concerne un film en polypropylène en forme de ruban destiné au support d'étiquettes, comportant une zone d'affaiblissement transversale entre chaque étiquette favorisant le déchirement du film suivant la zone d'affaiblissement, la zone d'affaiblissement étant pourvue de motifs prédécoupés non contigus possédant un axe de symétrie dans le sens de leur longueur correspondant à la direction de la zone d'affaiblissement.

Le domaine technique de l'invention est celui de la fabrication d'étiquettes auto-adhésives en bobines, en particulier pour des étiquettes destinées au marquage manuel des produits, notamment dans le secteur de la vente au détail.

Par leur consistance ou par leur forme, les objets fragiles, les objets mous et les objets qui ne sont pas plats ne peuvent être étiquetés automatiquement par machine. Ils nécessitent donc un étiquetage manuel. Il en va de même pour certains produits frais en libre-service dans le commerce de détail. Ils sont étiquetés manuellement lors de la mise en rayon.

Le commerçant dispose d'un dispositif capable d'imprimer des étiquettes. Le dérouleur de l'appareil est chargé d'un ruban d'étiquettes vierges. L'utilisateur entre le texte à imprimer tel que le prix, la date ou autres informations et lance l'impression pour un nombre d'étiquettes déterminé. Les étiquettes sont imprimées une à une tandis que le ruban se déroule au fur et à mesure et met ainsi les étiquettes imprimées à disposition de l'utilisateur. Une fois l'impression terminée, la série d'étiquettes imprimées peut être séparée du reste du rouleau. La série d'étiquettes imprimées à la main, l'utilisateur peut séparer les étiquettes de leur support et les coller sur les articles individuellement. Selon le produit à marquer, le milieu dans lequel se déroule l'étiquetage peut être une atmosphère sèche, humide ou/et chaude (boulangerie) ou réfrigérée.

Un rouleau d'étiquettes est fabriqué à base d'un ruban de complexe adhésif, dans lequel est découpée la forme des étiquettes. Les complexes adhésifs sont généralement composés de quatre couches superposées et contrecollées: un frontal, un adhésif, une couche d'antiadhésif et un dorsal. Le frontal et l'adhésif contrecollés forment l'étiquette, tandis que le dorsal et l'antiadhésif constituent le support de l'étiquette. Un mode de fabrication de complexe adhésif et sa structure sont décrits dans la demande de brevet W02004/087827.

Le complexe adhésif est fourni sous forme de ruban enroulé sur une bobine, puis il est transformé en rouleau d'étiquettes. A ces fins, la forme des étiquettes est découpée dans l'épaisseur du frontal. Par l'échenillage, qui consiste à retirer les parties superflues du frontal qui se trouvent autour des formes découpées, on obtient une bobine avec un ruban de dorsal continu sur lequel se trouvent collées les étiquettes alignées les unes à la suite des autres. Il existe différents types d'étiquettes, en plastique et en papier.

Pour les complexes adhésifs en bobine, les dorsaux les plus souvent utilisés sont le papier glassine, le film en polypropylène (PP) transparent et le film en polyéthylène téréphtalate (PET) transparent.

Le papier glassine est un papier lisse de structure dense, recouvert d'une couche de silicone. Il est principalement utilisé pour la pose d'étiquettes automatique ou manuelle telle que dans les balances de distribution alimentaire au détail. Le papier glassine, du fait de sa résistance à la traction transversale se déchire facilement à la main. Il est utilisé dans la majorité des applications d'étiquetage, dans la grande distribution et dans la distribution alimentaire au détail.

Cependant, sa faible résistance à la traction rend sa transformation à grande vitesse en machine délicate. Il ne peut être travaillé à grande vitesse, et lorsqu'il se déchire, les machines doivent être arrêtées, ce qui engendre une perte de temps et de rendement pour le fabricant.

En outre, le papier glassine présente l'inconvénient de produire de la poussière lors de sa transformation, ce qui nuit aussi aux machines. De plus, par sa sensibilité à l'humidité, son usage n'est pas idéal pour l'étiquetage en milieu réfrigéré. Un autre inconvénient du papier glassine est le recyclage compliqué et coûteux du matériau, la glassine devant d'abord être séparée de sa couche de silicone avant d'être traitée. Les dorsaux filmiques possèdent d'autres propriétés que le papier glassine. De ce fait ils offrent d'autres conditions pour la production, l'utilisation et le recyclage du matériau constituant le dorsal de l'étiquette.

En ce qui concerne la production, les dorsaux filmiques présentent l'avantage d'être plus résistants à la tension que le papier glassine. Ils peuvent donc être travaillés en machine à des vitesses plus élevées. De plus, leur transformation ne produit pas de poussière. Les machines qui le travaillent ou les imprimantes qui l'utilisent restent donc propres, ce qui favorise le rendement de la production d'étiquettes. Quant à l'échenillage, qui consiste à retirer les parties superflues d'adhésif découpées autour des étiquettes, il s'opère plus facilement avec les dorsaux filmiques qu'avec le papier glassine.

Pour ce qui est de l'utilisation, considérons le déchirement du dorsal qui permet de séparer la série d'étiquettes imprimées du reste du rouleau. Les dorsaux en polypropylène et ceux en polyéthylène téréphtalate étant très résistants à la traction, ils ne peuvent être déchirés sans aide subsidiaire. Le dispositif imprimant les étiquettes peut comprendre une zone dentée prévue pour déchirer le dorsal. L'inconvénient de la zone dentée est qu'elle demande une manoeuvre d'ajustage de la part de l'utilisateur pour que le déchirement ait lieu exactement entre deux étiquettes, sans que celles-ci soient endommagées. Les étiquettes étant disposées très proches les unes des autres sur le dorsal, la zone dentée demande un geste précis difficile à réaliser.

La demande de brevet WO02/053473 décrit une méthode pour créer une zone d'affaiblissement sur un film. Le procédé consiste à appliquer une source de chaleur sur les parties du film (ligne ou suite de motifs) constituant la zone d'affaiblissement et ainsi à changer la direction des cristaux du film afin de le rendre plus fragile. Cette méthode présente l'avantage de ne pas perforer la surface du film. Un tel film est demandé pour les emballages dont la surface doit être imperméable. Cependant cette méthode délicate demande des outils coûteux et sophistiqués et pour cela n'est pas adaptée au ruban d'étiquettes dont le dorsal n'a d'autre usage que le support d'étiquettes. De plus, la réalisation de la zone d'affaiblissement sur le dorsal a lieu après le prédécoupage des étiquettes, dans les espaces séparant les étiquettes. La proximité des étiquettes avec la zone d'affaiblissement ne permet pas l'emploi d'outils utilisant de fortes sources de chaleur car ils risqueraient d'endommager les étiquettes.

A vrai dire, une pratique courante sur les bobines d'étiquettes avec dorsal filmique en polyéthylène téréphtalate est le prédécoupage. Une simple ligne discontinue est découpée dans l'épaisseur du dorsal, entre deux étiquettes dans le sens transversal du ruban. Ainsi une traction en biais entraîne le déchirement du ruban sur la zone d'affaiblissement créée par la ligne discontinue prédécoupée, dans la direction de la ligne discontinue prédécoupée. Le prédécoupage présente l'avantage qu'il nécessite les mêmes outils que pour l'estampage des étiquettes.

En revanche, un prédécoupage en forme de ligne discontinue n'est pas adapté au polypropylène, car une fois la déchirure amorcée, le matériau a tendance à se déchirer dans des directions aléatoires. En conséquence, le polypropylène est actuellement peu utilisé pour l'étiquetage manuel.

Après le collage de l'étiquette sur le produit, le dorsal a rempli sa fonction et n'est plus qu'un déchet. Le polypropylène et le polyéthylène téréphtalate n'étant pas dégradables et leur combustion dégageant des gaz toxiques, il faut envisager le recyclage du dorsal. Celui-ci est effectué de nos jours en refondant le film et en lui redonnant une nouvelle forme. Le polypropylène peut être recyclé de cette manière presque à l'infini.

Les différentes caractéristiques du polypropylène et du polyéthylène téréphtalate influent aussi sur les conditions de recyclage. Le polyéthylène téréphtalate comporte un point de fusion se situant au-dessus de 255°C. La refonte de ce matériau nécessite tant d'énergie que les entreprises de recyclage du polyéthylène téréphtalate exigent des redevances pour le transformer.

Quant au polypropylène, son point de fusion se situant près de 163°C, son recyclage est beaucoup plus économique que celui du polyéthylène téréphtalate. Cette caractéristique rend le polypropylène intéressant pécuniairement pour les entreprises de recyclage, qui elles, versent un dédommagement à qui leur livre ce matériau. De ce fait, les consommateurs d'étiquettes ont tout intérêt à utiliser des dorsaux en polypropylène, autant pour l'environnement que financièrement.

Un autre avantage du polypropylène est qu'il peut être découpé avec les mêmes outils que le papier glassine, ce qui n'est pas le cas du polyéthylène téréphtalate.

La présente invention vise à prévoir un ruban pour le support d'étiquettes qui rassemble les avantages des différents matériaux cités.

La production du rouleau d'étiquette doit s'effectuer de manière rapide et rentable.

Son utilisation dans le domaine de l'étiquetage manuel doit être simple et efficace, semblable à celle du polyéthylène téréphtalate prédécoupé. C'est-à-dire que le dorsal servant au support de l'étiquette doit se déchirer de manière nette entre deux étiquettes. Le déchirement doit se faire d'un geste simple et rapide qui nécessite peu d'effort physique de la part de l'utilisateur.

Son recyclage doit être le plus écologique et le plus économique possible, comme celui du polypropylène.

A ces fins, l'invention propose un film en polypropylène en forme de ruban destiné au support d'étiquettes, comportant une zone d'affaiblissement transversale entre chaque étiquette favorisant le déchirement du film suivant la zone d'affaiblissement. La zone d'affaiblissement étant pourvue de motifs prédécoupés non contigus possédant un axe de symétrie dans le sens de leur longueur correspondant à la direction de la zone d'affaiblissement est caractérisé en ce que les motifs ont une forme fermée convexe, dont la longueur est plus grande que la largeur, et la distance séparant les motifs est inférieure à la longueur des motifs, et les angles aigus et les angles droits du motif, si existants, se trouvent toujours essentiellement sur l'axe de symétrie du motif dans le sens de sa longueur.

Les nouveaux dorsaux filmiques ont l'avantage d'être plus fins (env. 30 µm) que le papier glassine (env. 53 µm). En conséquence, les bobines d'étiquettes avec un dorsal filmique sont munies d'un ruban plus long qu'une bobine d'étiquettes avec dorsal en papier glassine de même volume, et de cette façon elles doivent être changées moins souvent. Ceci représente un gain de productivité considérable pour le transformateur comme pour l'emballeur. En outre, les dorsaux filmiques ont une meilleure résistance à la traction machine (dans le sens de la longueur du ruban) que le papier glassine et peuvent donc être travaillés à une vitesse plus rapide.

Les dorsaux filmiques ont aussi l'avantage de bien supporter l'humidité. Ils conviennent particulièrement à l'étiquetage de biens surgelés ou frigorifiés. Comme celui-ci a lieu dans des pièces réfrigérées, il est important que le dorsal une fois détaché de l'étiquette garde une certaine tenue et ne s'altère pas à l'air humide.

Un autre avantage du polypropylène est son point de fusion qui est nettement inférieur à celui du polyéthylène téréphtalate. Son recyclage demande peu d'énergie, si bien que le polypropylène est un matériau avantageux écologiquement et économiquement.

La zone d'affaiblissement positionnée de manière transversale sur le ruban facilite le déchirement du ruban. Ainsi l'utilisateur peut séparer la série d'étiquettes rapidement, sans effort, et sans employer de matériel supplémentaire. De plus, si un problème survient lors de l'impression ou si le dérouleur se bloque, il peut être très utile à l'utilisateur de pouvoir couper le ruban là où il l'entend, sans nécessiter aucun outil.

Par leur longueur plus grande que leur largeur, les motifs prédécoupés ont une forme allongée. Ils sont disposés de telle manière que le sens de la longueur des motifs correspond à la direction de la zone d'affaiblissement. La combinaison de la forme allongée, et la manière dont les motifs sont disposés présente l'avantage de donner une direction à la déchirure et ainsi, de la guider. Idéalement, la longueur des motifs est à peu près deux fois plus grande que leur largeur. La symétrie des motifs contribue à la symétrie de la déchirure.

Il a été observé qu'en tirant sur un prédécoupage en forme de ligne discontinue, le déchirement part de l'extrémité de la ligne discontinue dans une direction aléatoire. Quant aux angles inférieurs ou égaux à 90 degrés, ils sont plus sensibles au déchirement que les angles plus grands. De ce fait, il est avantageux que les angles inférieurs ou égaux à 90 degrés se trouvent sur la ligne d'affaiblissement, et que les motifs soient de forme convexe.

Selon une configuration possible, les motifs prédécoupés dans le dorsal sont traversants ou non-traversants. Le prédécoupage traversant qui implique que le motif est découpé dans toute l'épaisseur du film rend celui-ci plus fragile au déchirement que le découpage non-traversant. La résistance à la traction de la zone d'affaiblissement dépend d'une part du style de prédécoupage, et d'autre part de la taille du motif prédécoupé ainsi que de la distance séparant les motifs. Ces facteurs peuvent être combinés pour que la zone d'affaiblissement comporte la résistance à la traction optimale pour l'utilisateur.

Dans une autre variante de l'invention, les motifs sont découpés en partie de manière traversante et en partie de manière non-traversante, c'est-à-dire que le dorsal est découpé par endroit dans toute son épaisseur, et par endroit il n'est découpé que dans une partie de son épaisseur. Cela implique que certaines parties ou certains côtés du motif sont découpés dans toute l'épaisseur du dorsal tandis que d'autres parties ne sont découpées que dans une partie de l'épaisseur du dorsal. Il est aussi envisageable de découper certains motifs dans toute l'épaisseur, et de découper les autres motifs, par exemple un motif sur deux, dans une partie seulement de l'épaisseur du dorsal. La profondeur des découpages non-traversants peut aussi varier pour un même motif ou d'un motif à l'autre.

Avantageusement, un motif chevauche l'un des bords latéral du ruban de polypropylène. Ainsi la déchirure est amorcée par le prédécoupage, et le déchirement demande moins d'effort à l'utilisateur.

Selon une variante possible, le motif prédécoupé est un ovale. L'ovale comprend toutes les variantes ressemblant à un cercle allongé telles que l'ellipse, l'oeuf etc.

Dans un autre mode de réalisation, le motif à la forme d'un hexagone étiré.

Avantageusement, le motif est un losange.

Selon une autre configuration, le motif a la forme d'une lentille biconvexe. La lentille biconvexe peut être composée de deux arcs de cercle qui se rejoignent directement, ou comporter deux côtés supplémentaires entre les deux arcs de cercle.

D'autres caractéristiques et avantages de l'invention apparaissent dans la description détaillée suivante, qui se réfère aux dessins annexés, et illustre sans aucun caractère limitatif, des modes préférés de réalisation de l'invention.
- Fig. 1: représente les différentes couches dont sont composés les complexes adhésifs.
- Fig. 2: illustre schématiquement un tronçon d'une bobine de complexe adhésif.
- Fig. 3: montre le détail agrandi de la zone d'affaiblissement.
- Fig. 4: représente un détail agrandi la zone d'affaiblissement avec chevauchement du motif sur le bord latéral du ruban.
- Fig. 5: représente la zone d'affaiblissement avec des motifs en forme d'ovale.
- Fig. 6: représente la zone d'affaiblissement avec des motifs en forme d'hexagone étiré.
- Fig. 7: représente la zone d'affaiblissement avec des motifs en forme de losange.
- Fig. 8: représente la zone d'affaiblissement avec des motifs en forme de lentille biconvexe.

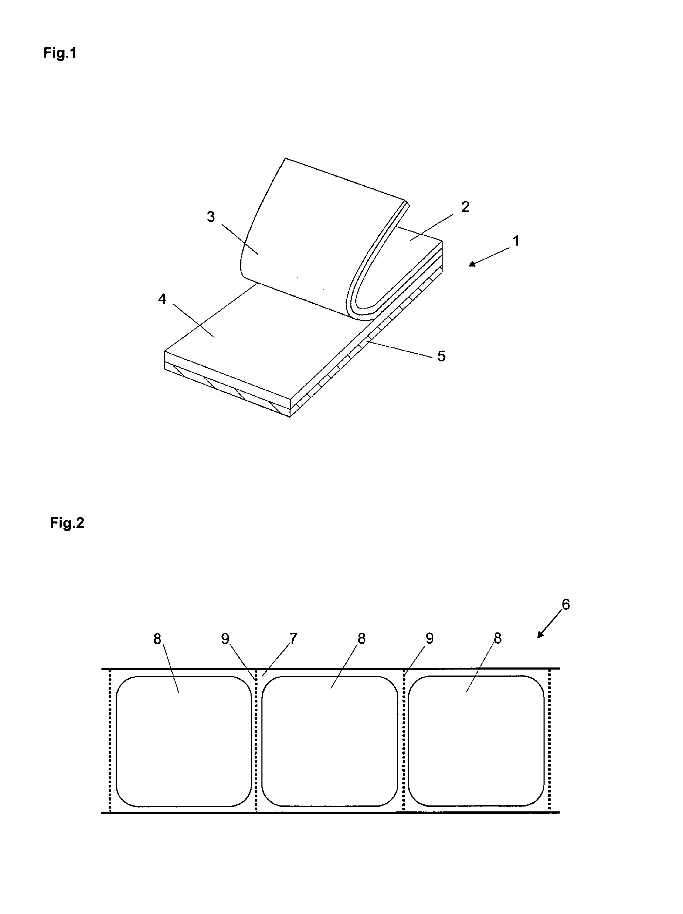

Comme représenté sur la figure 1, un complexe adhésif 1 de l'état de la technique est généralement composé de quatre couches contrecollées. La première est nommée frontal 2 et constitue l'étiquette 8. Sous le frontal 2 se trouve une couche d'adhésif 3 qui lie l'étiquette 8 à l'objet à marquer. Le dorsal 5 a besoin d'être recouvert d'une couche anti-adhésive 4 de silicone pour que l'étiquette 8 soit détachable de son support le dorsal 5.

La figure 2 représente un tronçon 6 d'une bobine d'étiquettes. Le complexe adhésif 1 en forme de ruban représenté sur la figure 1 a été découpé dans l'épaisseur du frontal 2, de manière à former des étiquettes 8 individuelles sur un support commun, le dorsal 5. Le matériel superflu du frontal 2 entourant les étiquettes 8 a été retiré pour faciliter le détachement de celles-ci du dorsal 5. Les étiquettes 8 se suivent sur le ruban dans le sens de la longueur. Entre chaque étiquette 8, perpendiculairement au bord du ruban se trouve une zone d'affaiblissement 9 représentée en pointillé sur la figure 2. La zone d'affaiblissement 9 définit une région du ruban où celui-ci est plus fragile. Celle-ci permet à l'utilisateur de déchirer manuellement le dorsal 5 de manière nette entre deux étiquettes 8. Ainsi, sans effort particulier il peut séparer les étiquettes 8 les unes des autres sans risque de les déchirer.

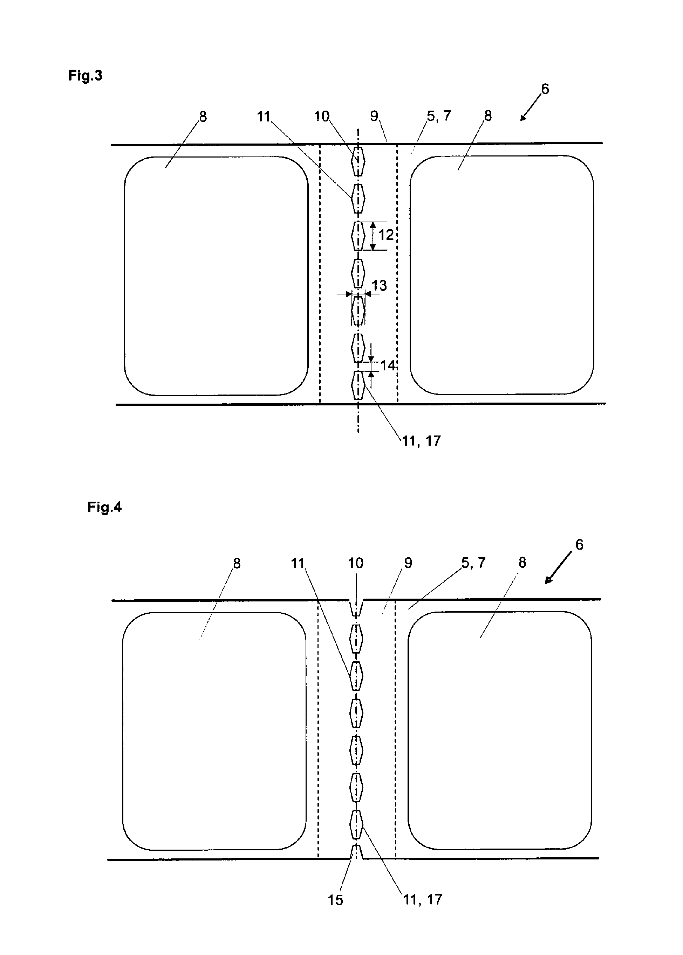

La figure 3 représente la zone d'affaiblissement 9 constituée de motifs 11 prédécoupés. Les motifs 11 et le dorsal 5 ne sont pas à la même échelle, les motifs 11 ont été agrandis par rapport à la largeur du dorsal 5 afin de rendre l'illustration plus claire. Les motifs 11 sont alignés dans le sens de leur longueur. Le prédécoupage du dorsal 5 le rend plus fragile à ces endroits-là. La proximité des motifs 11 prédécoupés augmente la fragilité du dorsal 5 et l'alignement des motifs 11 prédécoupé définit la direction du déchirement du ruban. Le découpage peut traverser toute l'épaisseur du motif ou une partie seulement. La profondeur du découpage dans l'épaisseur du ruban n'est pas visible sur les figures. Elle peut varier pour la forme d'un même motif et elle peut être différente d'un motif à l'autre.

Le polypropylène est un matériau relativement résistant à la tension malgré son épaisseur très fine (env. 30 µm). Ceci représente un avantage considérable pour l'élaboration des étiquettes 8. Qui dit bonne résistance à la tension dit vitesse de travail en machine élevée. En outre la résistance du polypropylène implique que les motifs 11 doivent être relativement proches les uns des autres pour permettre le déchirement manuel du film. La distance 14 qui les sépare doit être inférieure à la longueur des motifs 12 eux-mêmes.

Le polypropylène a certes la caractéristique d'être résistant, mais lorsqu'il est découpé, la direction que prend la déchirure est aléatoire. Voilà pourquoi non seulement la position des motifs 11 prédécoupés mais aussi leur forme et est déterminante pour obtenir une déchirure nette et unidirectionnelle. En donnant une forme allongée aux motifs 11 prédécoupés, on donne une direction à la déchirure. Le polypropylène étant fragile là où il comporte un découpage de forme angulaire, en particulier des angles droits et aigus, il est nécessaire de les placer symétriquement sur l'axe la zone d'affaiblissement. En conséquence, les angles qui ne se trouvent pas sur cet axe doivent être obtus.

La figure 4 représente une vue détaillée des motifs 11 de la zone d'affaiblissement 9 chevauchant le bord du ruban est représentée sur la figure 4. Ce chevauchement 15 crée une entaille dans le bord du ruban, ce qui facilite l'amorce du déchirement. Ainsi que sur la figure 3, les motifs 11 et le dorsal 5 ne sont pas représentés à la même échelle. Les motifs 11 ont été agrandis par rapport à la largeur du dorsal 5 afin de rendre l'illustration plus claire.

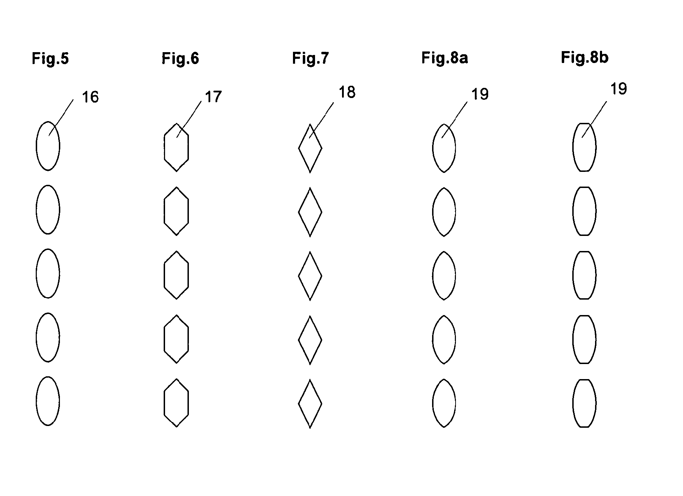

Comme illustré sur la figure 5, les motifs 11 peuvent aussi ne pas avoir d'angle du tout, comme un ovale 16.
La figure 6 montre une zone d'affaiblissement 9 composée d'hexagones allongés 17 prédécoupés.
La figure 7 illustre un motif 11 en forme de losange 18.
La figure 8 illustre deux exemples de motifs 11 en forme de lentille biconvexe 19.

Sur les figures 3 à 8, les angles aigus ou droits des motifs se trouvent sur l'axe de symétrie du motif.

On notera que l'invention n'est pas limitée aux modes de réalisation précédemment décrits mais pourrait présenter diverses variantes sans sortir du cadre des revendications.

### Liste des signes de référence

- 1: Complexe adhésif
- 2: Frontal
- 3: Adhésif
- 4: Anti-adhésif
- 5: Dorsal
- 6: Tronçon d'une bobine d'étiquettes
- 7: Film en polypropylène en forme de ruban
- 8: Étiquettes
- 9: Zone d'affaiblissement
- 10: Direction de la zone d'affaiblissement
- 11: Motif
- 12: Longueur du motif
- 13: Largeur du motif
- 14: Distance séparant les motifs
- 15: Chevauchement du motif avec un bord latéral du film
- 16: Motif en forme d'ovale
- 17: Motif en forme d'hexagone étiré
- 18: Motif en forme de losange
- 19: Motif en forme de lentille biconvexe

## Revendications

1. Film en polypropylène en forme de ruban (7) destiné au support d'étiquettes (8), comportant une zone d'affaiblissement (9) transversale entre chaque étiquette (8) favorisant le déchirement du film suivant la zone d'affaiblissement (9), la zone d'affaiblissement (9) étant pourvue de motifs (11) prédécoupés non contigus possédant un axe de symétrie dans le sens de leur longueur correspondant à la direction de la zone d'affaiblissement (10), les motifs (11) ayant une forme fermée convexe, dont la longueur (12) est plus grande que la largeur (13), et la distance séparant les motifs (14) étant inférieure à la longueur des motifs (12), et les angles aigus et les angles droits des motifs (11), si existants, se trouvant toujours essentiellement sur l'axe de symétrie des motifs dans le sens de leur longueur.

2. Film en polypropylène selon la revendication 1 **caractérisé en ce que** les motifs (11) prédécoupés sont traversants ou non-traversants dans l'épaisseur du film.

3. Film en polypropylène selon la revendication 1 **caractérisé en ce que** les motifs (11) prédécoupés sont partiellement traversants et partiellement non-traversants dans l'épaisseur du film.

4. Film en polypropylène selon l'une des revendications 1 à 3 **caractérisé en ce que** l'amorce du déchirage du film est facilité par le chevauchement (15) du motif et au moins un bord latéral du film.

5. Film en polypropylène selon l'une des revendications 1 à 4 **caractérisé en ce que** le motif (11) est un ovale (16).

6. Film en polypropylène selon l'une des revendications 1 à 4 **caractérisé en ce que** le motif (11) est un hexagone allongé (17).

7. Film en polypropylène selon l'une des revendications 1 à 4 **caractérisé en ce que** le motif (11) est un losange (18).

8. Film en polypropylène selon l'une des revendications 1 à 4 **caractérisé en ce que** le motif (11) est en forme de lentille biconvexe (19).

9. Film en polypropylène selon l'une des revendications 1 à 4 **caractérisé en ce que** les motifs (11) ont différentes formes selon une ou plusieurs des revendications 5 à 8.
